(19) Europäisches Patentamt
European Patent Office
Office européen des brevets

(11) **EP 1 570 275 B1**

(12) **FASCICULE DE BREVET EUROPEEN**

(45) Date de publication et mention
de la délivrance du brevet:
**05.10.2011 Bulletin 2011/40**

(51) Int Cl.:
***G01P 15/10*** *(2006.01)* ***G01L 1/10*** *(2006.01)*

(21) Numéro de dépôt: **03796070.5**

(22) Date de dépôt: **01.12.2003**

(86) Numéro de dépôt international:
**PCT/EP2003/050915**

(87) Numéro de publication internationale:
**WO 2004/053503 (24.06.2004 Gazette 2004/26)**

(54) **ACCELEROMETRE A POUTRE VIBRANTE**

BESCHLEUNIGUNGSSENSOR MIT VIBRIERENDEN SCHWINGBALKEN

VIBRATING BEAM ACCELEROMETER

(84) Etats contractants désignés:
**CH DE FR GB LI SE**

(30) Priorité: **10.12.2002 FR 0215599**

(43) Date de publication de la demande:
**07.09.2005 Bulletin 2005/36**

(73) Titulaire: **Thales**
**92200 Neuilly Sur Seine (FR)**

(72) Inventeurs:
• **QUER, Régis,**
**THALES Intellectual Property**
**F-94117 ARCUEIL (FR)**
• **INGLESE, Jérôme,**
**THALES Intellectual Property**
**F-94117 ARCUEIL (FR)**
• **ROUGEOT, Claude,**
**THALES Intellectual Property**
**F-94117 ARCUEIL (FR)**

(74) Mandataire: **Henriot, Marie-Pierre et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 0 318 152 US-A- 5 095 764**
**US-A- 5 969 249 US-A- 5 969 250**

• **PATENT ABSTRACTS OF JAPAN vol. 0110, no. 19 (P-537), 20 janvier 1987 (1987-01-20) & JP 61 194325 A (SHINKO DENSHI KK), 28 août 1986 (1986-08-28)**

**Description**

Le domaine de l'invention est celui des accéléromètres monolithiques plats. La structure plate permet une fabrication simple et économique notamment par des procédés d'attaque chimique. De plus, la fabrication peut être collective.

Un accéléromètre monolithique plat comporte classiquement un corps ayant une base et deux cellules de mesure en vue d'une mesure différentielle. Une cellule de mesure comprend typiquement une masse sismique reliée d'une part à la base et d'autre part à un capteur de force lui-même également relié à la base. Lorsque l'accéléromètre est soumis à une accélération suivant l'axe sensible qui est l'axe de l'accélération à mesurer, la masse sismique est soumise à une force d'inertie qui est amplifiée et transmise au capteur de force par des moyens permettant d'amplifier la force ou le déplacement transmis.

Dans la demande de brevet FR 0102573, l'amplification est obtenue au moyen d'un bras dit bras de levier qui prolonge la masse sismique. Le déplacement de la masse sismique est transmis au capteur de force au moyen de ce bras de levier. Plus précisément, le bras est relié à la base par une articulation permettant à la masse de tourner autour d'un axe perpendiculaire à l'axe sensible de l'accéléromètre et est relié au capteur de force par une charnière. Lorsque l'accéléromètre est soumis à une accélération suivant l'axe sensible, la masse sismique est soumise à une force qui la fait tourner autour de l'articulation, ainsi donc que la partie du bras de levier reliée au capteur de force.

Le capteur de force est à poutre(s) vibrante(s). La poutre vibrante est reliée à des électrodes permettant de la faire vibrer à sa fréquence de résonance et à un circuit de mesure de la variation de sa fréquence de résonance.

Les cellules de mesure sont montées de manière à ce que lorsque l'accéléromètre est soumis à une accélération suivant l'axe sensible, l'une des poutres subit une force de traction, l'autre poutre subissant une force de compression de même valeur, ces traction ou compression faisant varier la fréquence de résonance de la poutre mesurée par le circuit de mesure. On obtient ainsi une mesure différentielle permettant notamment de s'affranchir de certains effets non linéaires.

La variation de la fréquence de résonance est directement liée au déplacement du capteur de force induit par la rotation de la partie du bras de levier reliée au capteur de force. L'extrémité de la poutre subit aussi une certaine rotation ce qui s'avère souvent gênant, notamment dans le cas d'un diapason (c'est-à-dire de deux poutres formant un diapason) où la force transmise aux deux poutres n'est pas exactement identique

De plus, la qualité d'usinage des charnières et articulations est primordiale et constitue une des limitations industrielles de cet accéléromètre.

En outre le déplacement étant proportionnel à la longueur du bras de levier, l'encombrement est d'autant plus important que l'on souhaite obtenir un grand rapport d'amplification.

Un but important de l'invention est donc de proposer un accéléromètre dont les moyens d'amplification ne comportent pas de bras de levier utilisé en rotation et comportant de manière générale un résonateur qui peut être une poutre vibrante.

Pour atteindre ces buts, l'invention propose un accéléromètre micro-usiné dans une plaque plane comprenant une base, et au moins une cellule de mesure comprenant une masse sismique mobile reliée à la base et susceptible de se déplacer en translation suivant l'axe Oy sensible de l'accéléromètre sous l'effet d'une accélération γ suivant cet axe Oy, une cellule à résonateur comportant un résonateur susceptible de vibrer et de subir une traction ou une compression en fonction du sens de l'accélération γ et placé symétriquement par rapport à un axe de symétrie S de la structure, cet axe S étant parallèle à l'axe Oy et passant par le centre de gravité de la masse sismique, la cellule de mesure comprenant en outre des moyens d'amplification de la force d'accélération générant la translation comprenant au moins un pied d'ancrage à la base, deux terminaisons rigides de la cellule à résonateur et deux paires de bras micro-usinés, les paires étant symétriques par rapport à l'axe S, chaque paire comportant un premier bras reliant un premier point d'attache sur une terminaison et un deuxième point d'attache sur la masse sismique, et un deuxième bras reliant un troisième point d'attache à la même terminaison et un quatrième point d'attache au pied d'ancrage, l'angle α entre l'axe Ox perpendiculaire à l'axe Oy et la ligne joignant les premier et deuxième points d'attache étant symétrique par rapport à l'axe reliant les terminaisons par leur milieu, de l'angle entre l'axe Ox et la ligne joignant les troisième et quatrième points d'attache et suffisamment faible pour que la force exercée en traction ou en compression sur le résonateur soit supérieure à la force d'accélération exercée sur la masse sismique

En raison de la symétrie de cette structure, les déplacements de la masse sismique, des terminaisons d'encastrement et du résonateur sont parfaitement axiaux. De plus les performances de cette structure, c'est-à-dire le rapport d'amplification obtenu est simplement déterminé par l'angle α ; la géométrie de la masse sismique dont le centre de gravité est situé sur l'axe de symétrie S, n'intervient pas sur les performances de l'accéléromètre.

Selon un premier mode de réalisation, les terminaisons rigides du résonateur sont des éléments d'encastrement des extrémités du résonateur: la cellule à résonateur comprend simplement le résonateur lui-même.

Selon un autre mode de réalisation, la cellule à résonateur comporte deux éléments rigides d'encastrement des extrémités du résonateur et deux paires de bras secondaires micro-usinés, ces paires étant symétriques par rapport à l'axe S, chaque paire comportant un premier bras secondaire reliant un premier point d'attache sur un élément d'encastrement et un deuxième point d'attache sur une terminaison de la cellule, et un deuxième bras secondaire reliant un troisième point d'attache à l'autre élément d'encastrement et un quatrième point d'attache à la même terminaison de la cellule, l'angle β entre l'axe Oy et la ligne joignant les premier et deuxième points d'attache étant symétrique par rapport à l'axe passant par les milieux des éléments d'encastrement, de l'angle entre l'axe Oy et la ligne joignant les troisième et quatrième points d'attache et suffisamment faible pour que la force exercée en traction ou en compression sur le résonateur soit supérieure à la force d'accélération exercée sur la masse sismique.

Ce mode de réalisation correspond à une configuration en cascade, visant à multiplier le rapport d'amplification de l'accéléromètre.

D'autres caractéristiques et avantages de l'invention apparaîtront à la lecture de la description détaillée qui suit, faite à titre d'exemple non limitatif et en référence aux dessins annexés dans lesquels :

la figure 1 représente schématiquement un premier mode de réalisation d'une structure de cellule de mesure d'un accéléromètre selon l'invention, dans laquelle la masse sismique est située d'un côté des moyens d'amplification, les paires de bras étant disposées en « papillon »,
les figures 2 à 5 représentent schématiquement un deuxième mode de réalisation d'une structure de cellule de mesure d'un accéléromètre selon l'invention, dans laquelle la masse sismique entoure les moyens d'amplification, les paires de bras étant disposées en « papillon » figures 2 à 4 et en « cric » figure 5 ; figure 2 les paires de bras sont situés de l'autre côté du résonateur par rapport aux terminaisons, figure 3, ils sont situés du même côté que le résonateur, et figure 4, les terminaisons sont en forme de U,
la figure 6 représente schématiquement un mode de réalisation d'une structure de cellule de mesure d'un accéléromètre selon l'invention, dans laquelle les bras sont courbes suivant une forme concave,
la figure 7 représente schématiquement un mode de réalisation d'une structure de cellule de mesure d'un accéléromètre selon l'invention, dans laquelle les bras sont courbes suivant une forme convexe,
la figure 8 représente schématiquement un exemple d'accéléromètre selon l'invention, comportant deux cellules de mesure,
la figure 9 représente schématiquement un exemple d'accéléromètre selon l'invention comportant deux cellules de mesure qui partagent la même masse sismique située entre leurs moyens d'amplification,
la figure 10 représente schématiquement un exemple d'accéléromètre selon l'invention comportant deux cellules de mesure qui partagent la même masse sismique située sur un côté de l'accéléromètre,
la figure 11 représente schématiquement un exemple d'accéléromètre selon l'invention comportant deux cellules de mesure qui partagent la même masse sismique située autour de leurs moyens d'amplification,
la figure 12 représente schématiquement un exemple d'accéléromètre selon l'invention selon une configuration en cascade.

Dans la suite, on va prendre comme exemple de résonateur deux poutres formant diapason, que l'on fait vibrer en opposition de phase au moyen de deux électrodes. C'est cette configuration en diapason qui est représentée sur les figures. On pourrait tout aussi bien utiliser comme résonateur une poutre vibrante ou plusieurs poutres vibrantes ou une barre de torsion.

L'accéléromètre à poutres vibrantes selon l'invention comporte de préférence deux cellules de mesures qui peuvent être réalisées par usinage d'un substrat de silicium sur isolant (SOI) ou de quartz ou d'un autre matériau, mais d'autres méthodes sont également possibles.

Un substrat de silicium sur isolant est constitué d'un substrat monolithique fixe de silicium de quelques centaines de micromètres d'épaisseur (450 μm par exemple) constituant la base de l'accéléromètre, qui porte sur sa face avant une fine couche d'oxyde de silicium de quelques micromètres d'épaisseur (2 μm par exemple) elle-même recouverte d'une couche de silicium monocristallin de quelques dizaines de micromètres d'épaisseur (60 μm par exemple). L'usinage consiste à attaquer le silicium monocristallin par sa face avant jusqu'à atteindre la couche d'oxyde, avec un produit de gravure sélectif qui attaque le silicium sans attaquer significativement l'oxyde. On arrête la gravure lorsque la couche d'oxyde est mise à nu. Cette couche d'oxyde peut elle-même être enlevée par attaque sélective avec un autre produit de manière à ne conserver que la couche superficielle de silicium. Celle-ci peut ainsi être gravée selon les motifs de surface désirés au moyen de techniques de photogravure ou d'une autre technique en usage en microélectronique pour obtenir ainsi la structure plane mobile désirée.

Par la suite on utilisera un repère O,x,y,z représenté sur les figures, dans lequel le plan des figures est le plan O,x,y, l'axe Oz représentant la direction perpendiculaire à ce plan. On désigne par axe Ox (respectivement Oy, Oz) un axe parallèle à l'axe Ox (respectivement Oy, Oz) représenté sur les figures. D'une figure à l'autre, les mêmes éléments sont désignés par les mêmes références.

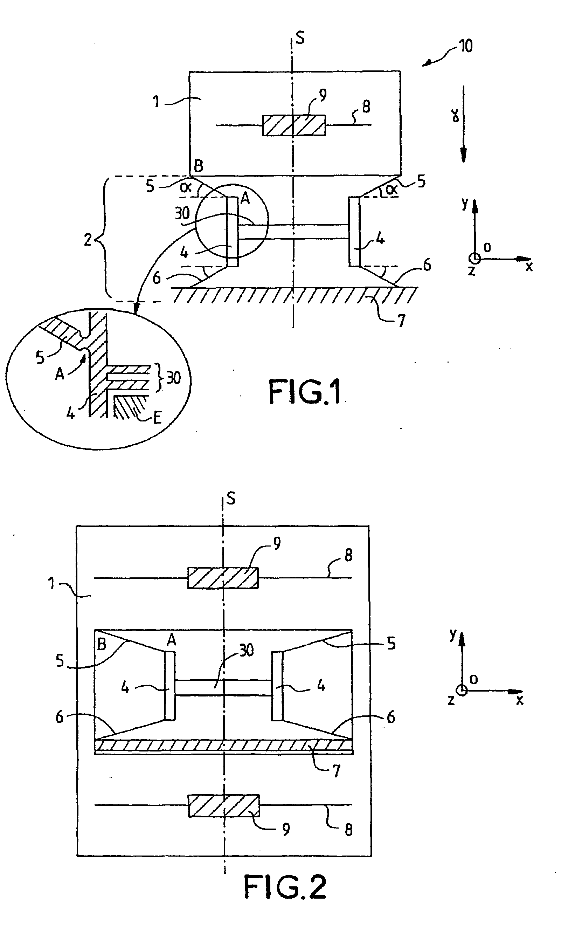

La structure plane mobile 10 d'une cellule de mesure de l'accéléromètre, schématiquement représentée figure 1, comporte une masse sismique 1 mobile susceptible de se déplacer en translation selon l'axe sensible de l'accéléromètre désigné axe Oy, qui est l'axe de l'accélération $\gamma$ à mesurer, et des moyens d'amplification 2 de la force générant cette translation, mesurée au moyen de deux poutres vibrantes 30 placées selon un axe Ox perpendiculaire à l'axe Oy, qui subissent une traction ou une compression selon le sens de l'accélération. Les poutres sont disposées symétriquement par rapport à un axe de symétrie S de la structure, cet axe de symétrie étant parallèle à l'axe Oy et passant par le centre de gravité de la masse : la géométrie de la masse sismique n'intervient alors pas sur les performances de l'accéléromètre.

Les poutres vibrantes 30 sont encastrées à chaque extrémité dans une terminaison 4 rigide. Chacune de ces terminaisons 4 comporte une paire de bras micro-usinés. Les deux paires sont symétriques par rapport à l'axe de symétrie S. Un premier bras 5 micro-usiné relie la terminaison 4 à la masse sismique 1. Pour que la terminaison 4 ne « flotte » pas par rapport à la base, c'est-à-dire par rapport au substrat monolithique fixe de silicium, un deuxième bras 6 micro-usiné, symétrique du premier bras par rapport à l'axe de la poutre, relie la terminaison 4 à un pied d'ancrage 7 fixé à la base. Ces bras 5 et 6 sont respectivement reliés à la masse sismique 1, à la terminaison 4 et au pied d'ancrage 7, par des points d'attache. L'épaisseur d'un bras 5 ou 6 peut varier sur sa longueur.

On a également schématiquement représenté figure 1 un zoom sur une partie des moyens d'amplification. Le premier bras 5 est articulé sur la terminaison 4 par un point d'attache A. On a également représenté une partie d'électrode E. Les deux poutres vibrantes 30 sont encastrées dans la terminaison 4 dans la mesure où elles sont formées par gravure par exemple de la même couche de matière. Les hachures représentent la matière, du silicium monocristallin par exemple dans le cas d'une cellule réalisée par usinage d'un SOI. Comme indiqué précédemment, les motifs de surface tels que les bras 5, point d'attache A, terminaison 4, poutres 30 et électrode E ont été obtenus par gravure du silicium monocristallin, puis par attaque de la couche d'oxyde.

L'angle $\alpha$ formé par l'axe Ox et la ligne joignant les points d'attache A et B du premier bras 5 qui, en raison de la symétrie des bras 5 et 6 par rapport à l'axe reliant les terminaisons par leur milieu, est symétrique de l'angle formé par l'axe Ox et la ligne joignant les points d'attache du deuxième bras 6. Cet angle $\alpha$ est suffisamment faible pour que la force exercée en traction ou en compression sur la poutre 30 soit supérieure à la force d'accélération exercée sur la masse sismique 1.

Ces moyens d'amplification 2 permettent en outre de libérer de l'espace autour des poutres vibrantes 30, notamment pour placer les électrodes dans le cas d'une excitation électrostatique. On rappelle que les poutres vibrantes sont mises en vibration à leur fréquence de résonance à l'aide d'électrodes disposées en regard de ces poutres, ou directement sur les poutres, suivant qu'il s'agit d'une excitation électrostatique ou piézo-électrique.

La masse sismique 1 est intrinsèquement guidée en translation selon l'axe Oy de par la symétrie de la structure. Pour ne conserver que ce degré de liberté selon Oy, on peut éventuellement raidir encore la structure selon Ox et Oz via des bras de guidage 8 orientés suivant l'axe Ox, dont une extrémité est fixée à la masse sismique 1 et l'autre à une partie 9 fixée à la base.

La force générant la translation de la masse sismique 1 selon l'axe Oy est transmise par les premiers bras 5 à chacune des terminaisons 4 qui, selon le sens de la translation, s'écartent ou se rapprochent l'une de l'autre suivant l'axe Ox, provoquant ainsi une traction ou une compression des poutres vibrantes 30. La structure 10 étant symétrique par rapport à l'axe S et en ce qui concerne les bras par rapport à l'axe des poutres, les déplacements de la masse sismique 1, des terminaisons 4 et de la poutre 30 sont parfaitement axiaux. Ainsi, lorsque les poutres 30 forment un diapason, les traction ou compression s'exercent de la même façon sur chacune des poutres du diapason.

Les performances de cette structure, c'est-à-dire le coefficient d'amplification obtenu est simplement déterminé par cet angle $\alpha$.

Lorsque la masse sismique 1 est soumise à une accélération $\gamma$ selon le sens -Oy, la force d'inertie M.$\gamma$ est amplifiée et transmise par les moyens d'amplification 2 aux poutres vibrantes 30. La force de compression (qui peut être une force de traction pour d'autres configurations) dans ces poutres a alors pour amplitude M.$\gamma$ / tg $\alpha$. Le rapport entre le déplacement de la masse sismique 1 selon -Oy et le déplacement selon Ox d'une terminaison est sensiblement égal à 2/tg $\alpha$. Selon son utilisation, cette structure peut constituer un système d'amplification de déplacement ou de force.

Selon un mode de réalisation préférentiel, la masse sismique 1 entoure les moyens d'amplification 2 à poutres vibrantes comme représenté figures 2 à 5. Une telle configuration permet d'obtenir une structure plus compacte.

Les bras 5, 6 peuvent être disposés selon différentes variantes.

Ils peuvent être disposés en « papillon » (ou en X) comme représenté figures 1, 2 et 4, cette disposition signifiant que le premier point d'attache A du premier bras 5 à la terminaison 4 est situé plus près de l'axe de symétrie S que son deuxième point d'attache B à la masse sismique 1. Dans ce cas, une translation de la masse sismique 1 vers les poutres 30 provoque alors une compression des poutres.

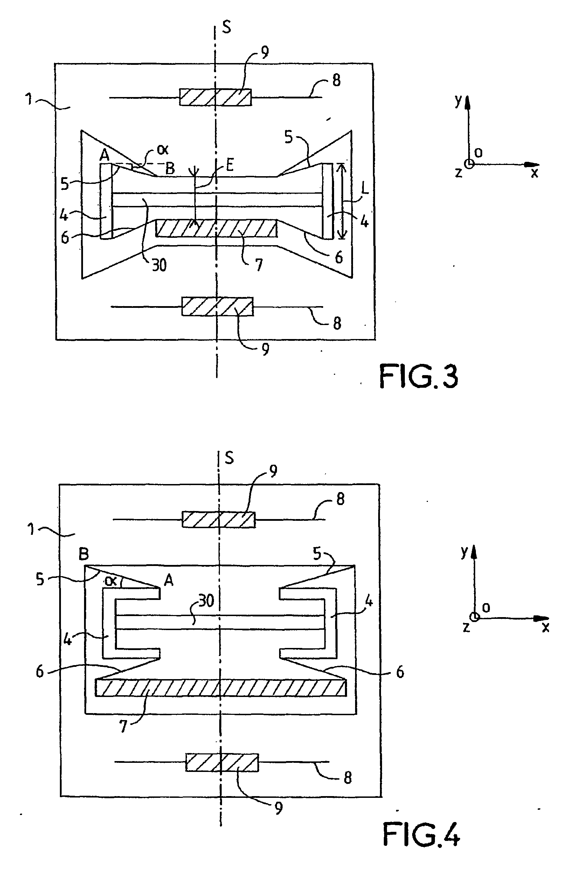

Comme représenté figure 2, les bras 5 et 6 sont situés de l'autre côté des poutres par rapport aux terminaisons. Ils peuvent aussi être situés du même côté que les poutres, lorsque la longueur L des terminaisons 4 est supérieure à l'écartement E entre la masse sismique 1 et le pied d'ancrage 7, comme représenté figure 3.

Une autre variante de cette disposition en papillon est représentée figure 4 : chaque terminaison 4 présente alors une forme en U.

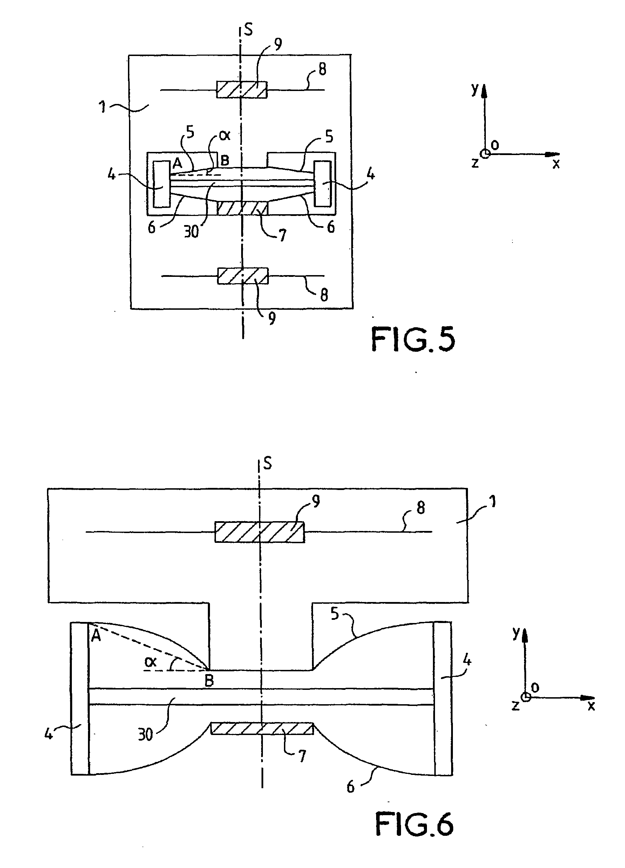

Les bras 5, 6 peuvent également être disposés en « cric » comme représenté figure 5, cette disposition signifiant que le premier point d'attache A du premier bras 5 est situé plus loin de l'axe de symétrie S que son deuxième point d'attache B. Une translation de la masse sismique 1 vers la poutre 3 provoque alors une traction des poutres.

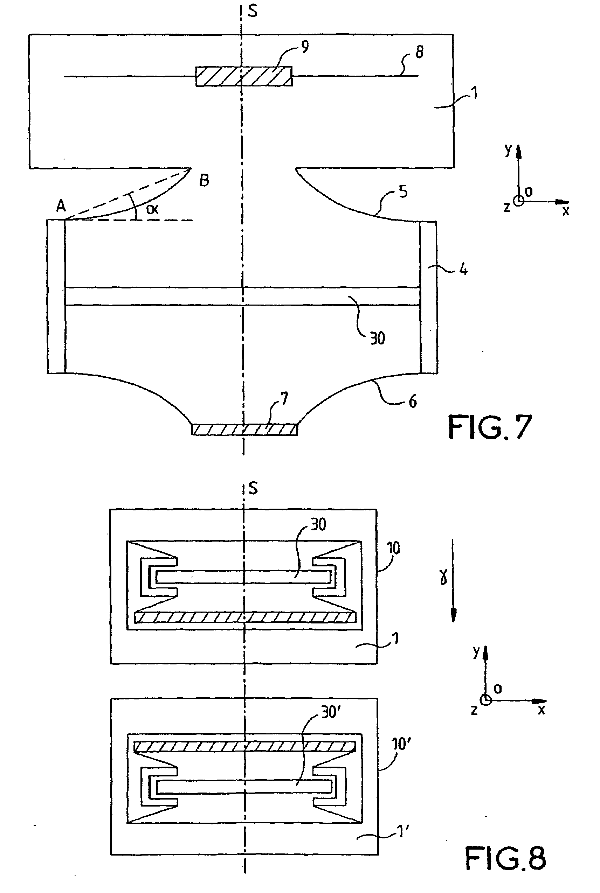

Sur ces figures, les bras sont représentés de manière rectiligne. Ils peuvent être courbes suivant une forme concave ou convexe comme respectivement représenté sur les figures 6 et 7 qui illustrent une disposition des bras en « cric » correspondant respectivement à celle des figures 3 et 5.

Bien sûr l'accéléromètre comporte de préférence deux structures mobiles 10 et 10' telles que décrites disposées l'une par rapport à l'autre de manière à obtenir une mesure différentielle de l'accélération. Un exemple de cette double structure est représenté figure 8, qui reprend pour chaque structure 10 et 10' la configuration avec des terminaisons en U de la figure 4 ; toute autre configuration peut être utilisée. Sous l'effet d'une accélération dans le sens opposé à l'axe Oy, les poutres vibrantes 30 de la structure 10 subissent une compression alors que les poutres vibrantes 30' de la structure 10' subissent une traction.

Selon un mode de réalisation particulier de l'invention, la double structure 10 et 10' ne comporte qu'une masse sismique commune aux deux cellules de mesure au lieu de comporter deux masses sismiques 1 et 1'. L'intérêt principal d'un tel accéléromètre est d'obtenir une fréquence de résonance masse-ressort identique pour les deux cellules. Une bonne approximation du calcul de cette fréquence est $f = \dfrac{tg(\alpha)}{2*\pi}\sqrt{\dfrac{kx}{m}}$ où m est la masse sismique, et kx est la raideur du résonateur selon l'axe Ox. Dans le cas où elles sont séparées, on peut oberver des dispersions de fréquence d'une cellule à l'autre.

La masse sismique peut être ou non située entre les deux moyens d'amplification 2, 2' ; elle peut également entourer les deux moyens d'amplification 2, 2. Les paires de bras peuvent être ou non disposés de la même façon d'une cellule à l'autre.

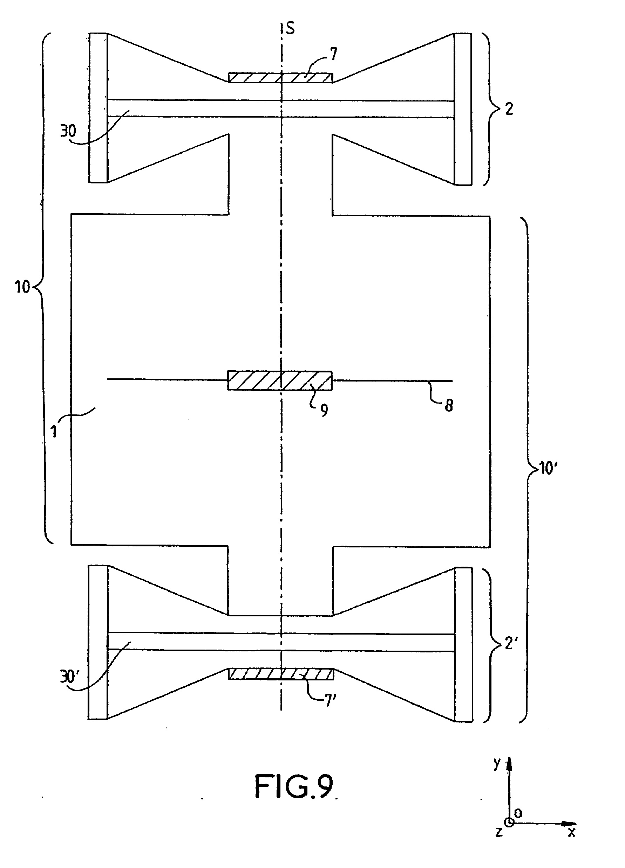

On a représenté figure 9 un accéléromètre ne comportant qu'une masse sismique 1 située au milieu des deux moyens d'amplification 2, 2' identiques dont les bras 5, 6, 5' et 6' sont disposés en « cric». Dans ce cas, sous l'effet d'une accélération dans le sens opposé à l'axe Oy, les poutres vibrantes 30 subissent une traction alors que les autres poutres vibrantes 30' subissent une compression.

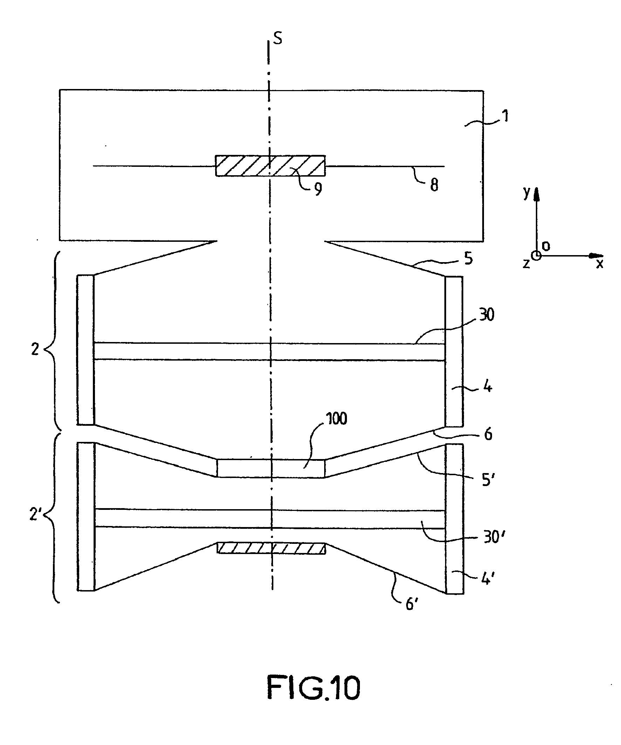

L'accéléromètre figure 10 ne comporte qu'une masse sismique 1 située d'un côté de l'accéléromètre, et des premiers moyens d'amplification 2 dont les bras 5, 6 sont disposés en « cric» alors que les bras 5', 6' des autres moyens d'amplification 2' sont disposés en « papillon ». Sur cette figure les bras 6 ne sont pas reliés à un pied d'ancrage mais sont reliés aux bras 5' par un élément de transmission 100 du déplacement des terminaisons 4 vers les terminaisons 4'. Dans ce cas, sous l'effet d'une accélération dans le sens opposé à l'axe Oy, les poutres vibrantes 30 subissent une traction alors que les autres poutres vibrantes 30' subissent une compression.

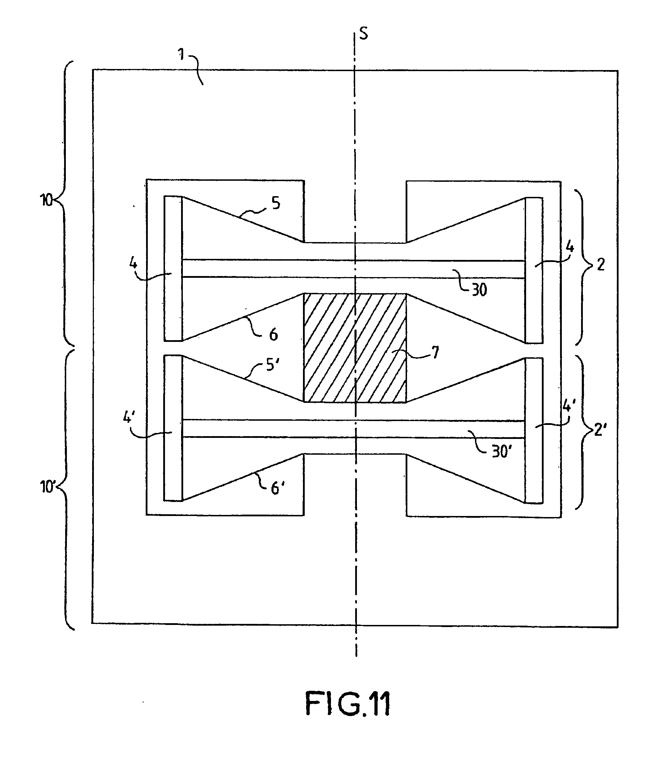

La figure 11 illustre le cas où la masse sismique entoure les deux moyens d'amplification 2, 2' dont les bras 5, 6, 5' et 6' sont disposés en « cric». Dans ce cas, sous l'effet d'une accélération dans le sens opposé à l'axe Oy, les poutres vibrantes 30 subissent une traction alors que les autres poutres vibrantes 30' subissent une compression.

On a réalisé un accéléromètre comportant la double structure telle que représentée figure 8 avec une fréquence de résonance du diapason d'environ 30 kHz pour une accélération nulle, une variation de la fréquence de résonance des poutres vibrantes mesurée par le circuit de mesure d'environ 3 kHz, un déplacement de la masse sismique suivant l'axe y d'environ 10 nanomètres par g, g étant l'accélération terrestre égale à 9.81 m/s$^2$. En négligeant la raideur des moyens d'amplification selon l'axe Ox par rapport à la raideur de la poutre, on obtient au niveau des poutres en fonction de l'angle $\alpha$, les rapports d'amplification 1/tg $\alpha$ suivants :

| Angle $\alpha$ | 1° | 2° | 3° | 4° | 5° | 10° |
|---|---|---|---|---|---|---|
| Amplification de force | 57 | 29 | 19 | 14 | 11 | 6 |

Selon un autre mode de réalisation, la structure de cellule de mesure peut être utilisée en cascade pour multiplier les rapports d'amplification.

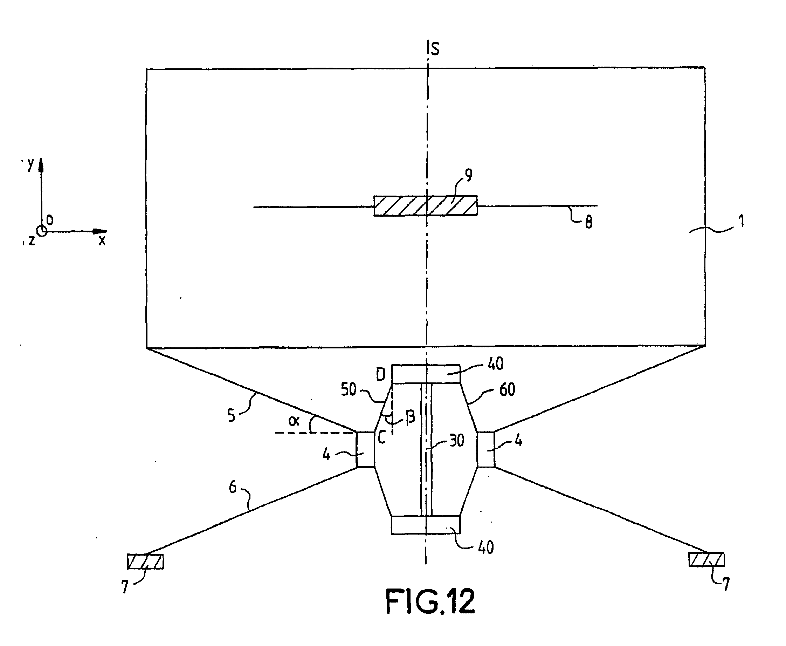

La figure 12 illustre le cas où deux étages d'amplification sont disposés en cascade tout en gardant de l'espace pour les électrodes. Les poutres vibrantes 30 représentées sur les figures 1 à 11 sont alors remplacées de manière plus générale par une cellule à poutres vibrantes également disposée entre les terminaisons 4 rigides.

Dans le cas de la figure 12, la cellule à poutres vibrantes comporte deux poutres vibrantes 30 placées sur l'axe de symétrie S (et donc symétriquement par rapport à cet axe S) encastrées à chaque extrémité dans un élément d'encastrement 40 rigide. Chacun de ces éléments d'encastrement 40 comporte une paire de bras secondaires micro-usinés. Les deux paires sont symétriques par rapport à l'axe de symétrie S. Un premier bras secondaire 50 relie l'élément d'encastrement 40 à une première terminaison 4 de la cellule. Un deuxième bras secondaire 60, symétrique du premier bras par rapport à l'axe des poutres 30, relie l'élément d'encastrement 40 à la deuxième terminaison 4 de la cellule. Ces bras 50 et 60 sont respectivement reliés à l'élément d'encastrement 40 et à la terminaison 4 de la cellule, par des points d'attache. L'épaisseur d'un bras secondaire 50 ou 60 peut varier sur sa longueur.

L'angle β formé par l'axe parallèle à l'axe de la poutre, ici l'axe Oy, et la ligne joignant les points d'attache C et D du premier bras 50 qui, en raison de la symétrie des bras 50 et 60 par rapport à l'axe des poutres 30, est symétrique de l'angle formé par l'axe parallèle à l'axe des poutres et la ligne joignant les points d'attache du deuxième bras 60, est suffisamment faible pour que la force exercée en traction ou en compression sur les poutres 30 soit supérieure à la force d'accélération exercée sur la masse sismique 1. Cette disposition en cascade qui entraîne une multiplication du rapport d'amplification, permet d'obtenir une force de traction ou de compression supérieure à celle obtenue avec une configuration sans cascade.

Finalement, les poutres vibrantes décrites en relation avec les figures 1 à 11 sont un cas particulier de cellule à poutres vibrantes. Dans ce cas particulier, les terminaisons rigides 4 de la cellule à poutres vibrantes sont confondues avec les éléments d'encastrement 40.

Différents exemples de modes de réalisation ont été présentés, mais il existe bien sûr d'autres configurations possibles.

## Revendications

1. Accéléromètre micro-usiné dans une plaque plane comprenant une base, et au moins une cellule de mesure comprenant une masse sismique mobile (1) reliée à la base et susceptible de se déplacer en translation suivant l'axe Oy sensible de l'accéléromètre sous l'effet d'une accélération γ suivant cet axe Oy, une cellule à résonateur comportant un résonateur (30) susceptible de vibrer et de subir une traction ou une compression en fonction du sens de l'accélération γ et placé symétriquement par rapport à un axe de symétrie S de la structure, cet axe S étant parallèle à l'axe Oy et passant par le centre de gravité de la masse sismique (1), la cellule de mesure comprenant en outre des moyens d'amplification (2) de la force d'accélération générant la translation comprenant au moins un pied d'ancrage (7) à la base, deux terminaisons (4) rigides de la cellule à résonateur et deux paires de bras micro-usinés (5, 6), les paires étant symétriques par rapport à l'axe S, chaque paire comportant un premier bras (5) reliant un premier point d'attache (A) sur une terminaison (4) et un deuxième point d'attache (B) sur la masse sismique (1), et un deuxième bras (6) reliant un troisième point d'attache à la même terminaison (4) et un quatrième point d'attache au pied d'ancrage (7), l'angle α entre l'axe Ox perpendiculaire à l'axe Oy et la ligne joignant les premier et deuxième points d'attache (A, B) étant symétrique par rapport à l'axe reliant les terminaisons (4) par leur milieu, de l'angle entre l'axe Ox et la ligne joignant les troisième et quatrième points d'attache et suffisamment faible pour que la force exercée en traction ou en compression sur le résonateur (30) soit supérieure à la force d'accélération exercée sur la masse sismique (1), **caractérisé en ce que** la cellule à résonateur comporte deux éléments (40) rigides d'encastrement des extrémités du résonateur (30) et deux paires de bras secondaires micro-usinés (50, 60), ces paires étant symétriques par rapport à l'axe S, chaque paire comportant un premier bras secondaire (50) reliant un premier point d'attache (D) sur un élément d'encastrement (40) et un deuxième point d'attache (C) sur une terminaison (4) de la cellule, et un deuxième bras secondaire (60) reliant un troisième point d'attache à l'autre élément d'encastrement (40) et un quatrième point d'attache à la même terminaison (4) de la cellule, l'angle β entre l'axe Oy et la ligne joignant les premier et deuxième points d'attache (D, C) étant symétrique par rapport à l'axe passant par les milieux des éléments d'encastrement (40), de l'angle entre l'axe Oy et la ligne joignant les troisième et quatrième points d'attache et suffisamment faible pour que la force exercée en traction ou en compression sur le résonateur (30) soit supérieure à la force d'accélération exercée sur la masse sismique (1).

2. Accéléromètre selon la revendication précédente, **caractérisé en ce que** les paires de bras (50, 60) sont rectilignes ou courbes.

3. Accéléromètre selon l'une quelconque des revendications précédentes, **caractérisé en ce que** le premier point d'attache (A) du premier bras (5) est situé plus loin de l'axe de symétrie S que son deuxième point d'attache (B).

4. Accéléromètre selon l'une quelconque des revendications 1 ou 2, **caractérisé en ce que** le premier point d'attache (A) du premier bras (5) est situé plus près de l'axe de symétrie S que son deuxième point d'attache (B).

5. Accéléromètre selon l'une quelconque des revendications précédentes, **caractérisé en ce que** les paires de bras (5, 6) sont rectilignes ou courbes.

6. Accéléromètre selon l'une quelconque des revendications précédentes, **caractérisé en ce que** la masse sismique (1) entoure les moyens d'amplification (2).

7. Accéléromètre selon l'une quelconque des revendications précédentes, **caractérisé en ce que** les premiers et deuxièmes bras (5, 6) présentent une épaisseur variable sur leur longueur.

8. Accéléromètre selon l'une quelconque des revendications précédentes, **caractérisé en ce qu'**il comporte en outre des bras de guidage (8) de la masse sismique (1) disposés suivant l'axe Ox et reliés à une partie (9) fixée à la base.

9. Accéléromètre selon l'une quelconque des revendications précédentes, **caractérisé en ce qu'**il comporte deux cellules de mesure (10, 10') placées l'une par rapport à l'autre de manière à ce que sous l'effet d'une accélération, le résonateur d'une cellule de mesure (10) subisse une traction alors que le résonateur de l'autre cellule de mesure (10') subit une compression.

10. Accéléromètre selon la revendication précédente, **caractérisé en ce que** les deux cellules de mesure (10, 10') ont une masse sismique commune.

11. Accéléromètre selon l'une quelconque des revendications 9 ou 10, **caractérisé en ce que** les bras (5, 6, 5', 6') sont disposés de la même façon pour chacune des cellules de mesure (10, 10').

12. Accéléromètre selon l'une quelconque des revendications 9 ou 10, **caractérisé en ce que** les bras (5, 6, 5', 6') ne sont pas disposés de la même façon pour chacune des cellules de mesure (10, 10').

13. Accéléromètre selon l'une quelconque des revendications précédentes, **caractérisé en ce que** le résonateur (30) comporte une poutre vibrante ou deux poutres vibrantes formant diapason ou au moins trois poutres vibrantes ou une barre de torsion.

**Claims**

1. An accelerometer micro-machined in a flat plate, comprising a base, and at least one measuring cell comprising a moveable seismic mass (1) that is connected to said base and is susceptible to move by translation along the sensitive axis Oy of said accelerometer under the effect of an acceleration $\gamma$ along said axis Oy, a resonator cell comprising a resonator (30) that is susceptible to vibration and to undergo traction or compression depending on the direction of the acceleration $\gamma$ and which is located symmetrically relative to an axis of symmetry S of the structure, said axis S being parallel to the axis Oy and passing through the centre of gravity of said seismic mass (1), said measuring cell further comprising means for amplifying (2) the acceleration force generating the translation movement comprising at least one anchoring foot (7) on the base, two rigid terminations (4) of the resonator cell and two pairs of micro-machined arms (5, 6), said pairs being symmetrical relative to the axis S, each pair comprising a first arm (5) connecting a first attachment point (A) on a termination (4) and a second attachment point (B) on the seismic mass (1), and a second arm (6) connecting a third attachment point to the same termination (4) and a fourth attachment point on the anchoring foot (7), the angle $\alpha$ between the axis Ox perpendicular to the axis Oy and the line linking the first and second attachment points (A, B) being symmetrical relative to the axis connecting the terminations (4) via their centre, the angle between the axis Ox and the line linking the third and fourth attachment points and being small enough so that the force exerted on the resonator (30) by traction or by compression is greater than the acceleration force exerted on the seismic mass (1), **characterised in that** the resonator cell comprises two rigid elements (40) for fixing the ends of the resonator (30) and two pairs of secondary micro-machined arms (50, 60), said pairs being symmetrical relative to the axis S, each pair comprising a first secondary arm (50) connecting a first attachment point (D) on a fixing element (40) and a second attachment point (C) on a termination (4) of the cell, and a second secondary arm (60) connecting a third attachment point to the other fixing element (40) and a fourth attachment point to the same termination (4) of the cell, the angle $\beta$ between the axis Oy and the line linking the first and second attachment points (B, C) being symmetrical relative to the axis passing through the centres of the fixing elements (40), the angle between the axis Oy and the line linking the third and fourth attachment points and being small enough so that the force exerted on the resonator (30) by traction or by compression is greater than the acceleration force exerted on the seismic mass (1).

2. The accelerometer according to the preceding claim, **characterised in that** the pairs of arms (50, 60) are rectilinear or curved.

3. The accelerometer according to any one of the preceding claims, **characterised in that** the first attachment point (A) of the first arm (5) is located further from the axis of symmetry S than its second attachment point (B).

4. The accelerometer according to any one of claims 1 to 2, **characterised in that** the first attachment point (A) of the first arm (5) is located closer to the axis of symmetry S than its second attachment point (B).

5. The accelerometer according to any one of the preceding claims, **characterised in that** the pairs of arms (5, 6) are rectilinear or curved.

6. The accelerometer according to any one of the preceding claims, **characterised in that** the seismic mass (1) surrounds the amplification means (2).

7. The accelerometer according to any one of the preceding claims, **characterised in that** the thickness of the first and second arms (5, 6) is variable over their length.

8. The accelerometer according to any one of the preceding claims, **characterised in that** it further comprises arms (8) for guiding the seismic mass (1) arranged along the axis Ox and connected to a part (9) fixed to the base.

9. The accelerometer according to any one of the preceding claims, **characterised in that** it comprises two measuring cells (10, 10') placed relative to each other so that, under the effect of an acceleration, the resonator of a measuring cell (10) undergoes traction, whereas the resonator of the other measuring cell (10') undergoes compression.

10. The accelerometer according to the preceding claim, **characterised in that** the two measuring cells (10, 10') have a common seismic mass.

11. The accelerometer according to any one of claims 9 to 10, **characterised in that** the arms (5, 6, 5', 6') are arranged in the same way for each of the measuring cells (10, 10').

12. The accelerometer according to any one of claims 9 to 10, **characterised in that** the arms (5, 6, 5', 6') are not arranged in the same way for each of the measuring cells (10, 10').

13. The accelerometer according to any one of the preceding claims, **characterised in that** the resonator (30) comprises one vibrating beam or two vibrating beams forming a tuner or at least three vibrating beams or one torsion bar.

**Patentansprüche**

1. Beschleunigungssensor, der in einer ebenen Platte mikrobearbeitet wurde, der Folgendes umfasst: eine Basis und wenigstens eine Messzelle, die eine bewegliche seismische Masse (1) umfasst, die mit der Basis verbunden ist und dazu neigt, sich entlang der empfindlichen Achse Oy des Beschleunigungssensors unter der Wirkung einer Beschleunigung γ entlang dieser Achse Oy translational zu bewegen, eine Resonatorzelle, die einen Resonator (30) umfasst, der dazu neigt zu vibrieren und einen Zug oder einen Druck in Abhängigkeit von der Richtung der Beschleunigung γ zu erfahren und der in Bezug auf eine Symmetrieachse S der Struktur symmetrisch platziert ist, wobei diese Achse S parallel zur Achse Oy ist und durch den Schwerpunkt der seismischen Masse (1) verläuft, wobei die Messzelle darüber hinaus Mittel zum Verstärken (2) der Beschleunigungskraft umfasst, die die Translation erzeugt, die wenigstens einen Verankerungsfuß (7) an der Basis, zwei starre (4) Abschlüsse der Resonatorzelle und zwei Paare von mikrobearbeiteten Armen (5, 6) umfassen, wobei die Paare in Bezug auf die Achse S symmetrisch sind, wobei jedes Paar einen ersten Arm (5), der einen ersten Befestigungspunkt (A) an einem Abschluss (4) und einen zweiten Befestigungspunkt (B) an der seismischen Masse (1) verbindet, und einen zweiten Arm (6) umfasst, der einen dritten Befestigungspunkt am selben Abschluss (4) mit einem vierten Befestigungspunkt am Verankerungsfuß (7) verbindet, wobei der Winkel α zwischen der Achse Ox lotrecht zur Achse Oy und der Linie, die den ersten und zweiten Befestigungspunkt (A, B) verbindet, in Bezug auf die Achse, die die Abschlüsse (4) an ihrer Mitte verbindet, mit dem Winkel zwischen der Achse Ox und der Linie, die den dritten und vierten Befestigungspunkt verbindet, symmetrisch und klein genug ist, damit die Kraft, die als Zug oder Druck auf den Resonator (30) ausgeübt wird, größer ist als die Beschleunigungskraft, die auf die seismische Masse (1) ausgeübt wird, **dadurch gekennzeichnet, dass** die Resonatorzelle zwei starre Elemente (40) zum Einspannen der Enden des Resonators (30) und zwei Paare von mikrobearbeiteten Sekundärarmen (50, 60) umfasst, wobei diese Paare in Bezug auf die Achse S symmetrisch sind, wobei jedes Paar einen ersten Sekundärarm (50), der einen ersten Befestigungspunkt (D) an einem Einspannelement (40) mit einem zweiten Befestigungspunkt (C) an einem Abschluss (4) der Zelle verbindet, und einen zweiten Sekundärarm (60) umfasst, der einen dritten Befestigungspunkt an dem anderen Einspannelement (40) mit einem vierten Befestigungspunkt am selben Abschluss (4) der Zelle verbindet, wobei der Winkel β zwischen der Achse Oy und der Linie, die den ersten und zweiten Befestigungspunkt (D, C) verbindet, in Bezug auf die Achse, die jeweils durch die Mitte der Einspannelemente (40) verläuft, zu dem Winkel zwischen der Achse Oy und der Linie, die den dritten und vierten Befestigungspunkt verbindet, symmetrisch und klein genug ist, damit die Kraft, die als Zug oder Druck auf den Resonator (30) ausgeübt wird, größer ist als die Beschleunigungskraft, die auf die seismische Masse (1) ausgeübt wird.

2. Beschleunigungssensor nach dem vorherigen Anspruch, **dadurch gekennzeichnet, dass** die Armpaare (50, 60) geradlinig oder gekrümmt sind.

3. Beschleunigungssensor nach einem der vorherigen Ansprüche, **dadurch gekennzeichnet, dass** sich der erste Befestigungspunkt (A) des ersten Arms (5) weiter von der Symmetrieachse S entfernt befindet als sein zweiter Befestigungspunkt (B).

4. Beschleunigungssensor nach einem der Ansprüche 1 oder 2, **dadurch gekennzeichnet, dass** sich der erste Befestigungspunkt (A) des ersten Arms (5) näher an der Symmetrieachse S befindet als sein zweiter Befestigungspunkt (B).

5. Beschleunigungssensor nach einem der vorherigen Ansprüche, **dadurch gekennzeichnet, dass** die Armpaare (5, 6) geradlinig oder gekrümmt sind.

6. Beschleunigungssensor nach einem der vorherigen Ansprüche, **dadurch gekennzeichnet, dass** die seismische Masse (1) die Verstärkungsmittel (2) umgibt.

7. Beschleunigungssensor nach einem der vorherigen Ansprüche, **dadurch gekennzeichnet, dass** die ersten und zweiten Arme (5, 6) eine variable Dicke über ihre Länge haben.

8. Beschleunigungssensor nach einem der vorherigen Ansprüche, **dadurch gekennzeichnet, dass** er darüber hinaus Arme (8) zum Führen der seismischen Masse (1) umfasst, die entlang der Achse Ox angeordnet und mit einem an der Basis fixierten Teil (9) verbunden sind.

9. Beschleunigungssensor nach einem der vorherigen Ansprüche, **dadurch gekennzeichnet, dass** er zwei Messzellen (10, 10') umfasst, die in Bezug aufeinander auf eine solche Weise platziert sind, dass der Resonator von einer Messzelle (10) unter der Wirkung einer Beschleunigung einen Zug erfährt, während der Resonator der anderen Messzelle (10') einen Druck erfährt.

10. Beschleunigungssensor nach einem der vorherigen Ansprüche, **dadurch gekennzeichnet, dass** die beiden Messzellen (10, 10') eine gemeinsame seismische Masse haben.

11. Beschleunigungssensor nach Anspruch 9 oder 10, **dadurch gekennzeichnet, dass** die Arme (5, 6, 5', 6') auf dieselbe Weise für jede der Messzellen (10, 10') angeordnet sind.

12. Beschleunigungssensor nach Anspruch 9 oder 10, **dadurch gekennzeichnet, dass** die Arme (5, 6, 5', 6') nicht auf dieselbe Weise für jede der Messzellen (10, 10') angeordnet sind.

13. Beschleunigungssensor nach einem der vorherigen Ansprüche, **dadurch gekennzeichnet, dass** der Resonator (30) einen Schwingungsbalken oder zwei Schwingungsbalken, die eine Stimmgabel bilden, oder wenigstens drei Schwingungsbalken oder einen Torsionsstab umfasst.

FIG.1

FIG.2

FIG.3

FIG.4

FIG.5

FIG.6

S

9    8

1

y
z ⊙ o → x

B
A   α

5

4

30

7    6

## FIG.7

S

30

10

y
1

γ

y
z ⊙ o → x

30'

10'

1'

## FIG.8

13

FIG.9

FIG.10

FIG.11

FIG.12

**EP 1 570 275 B1**

## RÉFÉRENCES CITÉES DANS LA DESCRIPTION

**Documents brevets cités dans la description**

- FR 0102573